Europäisches Patentamt

(19) European Patent Office    (11) Publication number: **0 146 205**

Office européen des brevets    **B1**

(12)    **EUROPEAN PATENT SPECIFICATION**

(45) Date of publication of patent specification: **09.11.88**    (51) Int. Cl.⁴: **G 01 K 1/08, G 01 K 1/12**

(21) Application number: **84305667.2**

(22) Date of filing: **20.08.84**

(54) **Repeating thermocouple.**

(30) Priority: **31.10.83 US 546967**

(43) Date of publication of application:
**26.06.85 Bulletin 85/26**

(45) Publication of the grant of the patent:
**09.11.88 Bulletin 88/45**

(84) Designated Contracting States:
**AT BE DE FR GB IT SE**

(56) References cited:
**DE-A-1 408 873**
**DE-A-1 648 201**
**US-A-4 396 792**

(73) Proprietor: **Falk, Richard Arden**
**519 Westminster Drive**
**Waukesha Wisconsin53186 (US)**

(72) Inventor: **Falk, Richard Arden**
**519 Westminster Drive**
**Waukesha Wisconsin53186 (US)**

(74) Representative: **Fisher, Bernard et al**
**Raworth, Moss & Cook 36 Sydenham Road**
**Croydon Surrey CR0 2EF (GB)**

## Description

The invention relates to a thermocouple assembly for repeated immersion in molten metal and a method of making the thermocouple which provides sufficient protection to the thermocouple element, cold junction and leads to enable repeated measurements with the same assembly. This application is a further development of the subject matter of U.S.—A—4,396,792. Although the structure illustrated in the foregoing patent achieved considerable improvements over the prior art, it has been discovered that in some instances molten metal penetrated around the quartz tube and through the refractory fibre wrap, and when the molten metal cooled it cracked the quartz thermocouple tube, preventing further use of the thermocouple assembly. It also was found that packing the refractory fibre around the quartz tube in the cavity could impose stresses on the quartz tube, and when the tube was heated could cause breakage of the thermocouple tube.

DE—A1—1,648,201 discloses a replaceable thermoelement immersion probe for determining the temperature of melts. The thermoelement comprises probes crimped in a quartz tube and covered by an aluminium protective cap. The cold point of the thermoelement is in a gas chamber sealed by thermosetting plastics gas-sealing plugs and surrounded by heat-resistant cement. Copper leads run from the cold point into a ceramic member and are connected to a measuring circuit. Apart from the tip of the quartz tube and its cap, the construction is held in a wooden body. This construction is not generally intended for repeated immersion.

DE—A—1,408,873 discloses a device for continuously measuring the temperature of iron and steel melts. The device comprises a temperature measuring head including a refractory ceramic protective tube and a thermoelement disposed in the tube which is firmly incorporated in a recess in a converter lining. The thermoelement itself is surrounded by a closed protective tube which projects into the converter. The measuring head is held within the ceramic tube by plug material which has to be drilled out when the measuring head is replaced. The construction is naturally such that it is tied for use with the converter in which it is installed and, because of its fixed location, cannot be used for repeated immersion in different melts or in a different part of the same melt.

The invention involves use of a thermosetting sand fill baked in place around the quartz tube as a substitute for the refractory fibre packing in the prior art patent 4,396,792. When the thermosetting sand is heated during use of the thermocouple assembly in a molten metal bath, the resins burn and do not expand and no added stresses are imposed upon the quartz tube. This has eliminated the breakage associated with the construction illustrated in U.S.—A—4,396,792.

According to one aspect of the present invention, there is provided a thermocouple assembly for repeated immersion of a temperature sensing element in a molten metal bath, said assembly including a support tube, a temperature sensing element having a U-shaped projecting tip with spaced legs, and a rigid support means for supporting said temperature sensing element within said tube, a refractory fibre sleeve fitted around said tube in such a way as to define a cavity at one end of said sleeve, said sleeve having an opening at said one end to allow said U-shaped tip to project therethrough, and a refractory fibre gasket spanning said opening in said sleeve, characterised by thermosetting sand packing filling said cavity and surrounding the part of said U-shaped tip within said cavity, and a refractory cement cap sealing the end of said fibre sleeve around the projecting tip and encasing said refractory fibre gasket.

According to another aspect of the present invention, there is provided a method of making a reusable thermocouple assembly as defined in the preceding paragraph, comprising the steps of inserting the thermocouple head in said sleeve with the tip projecting through said opening, filling said cavity surrounding said part of said tip with thermosetting sand, covering the cavity with said refractory fibre gasket, covering the gasket with said refractory cement and baking the sand to set the latter.

For a better understanding of the invention, and to show how the same may be carried into effect, reference will now be made, by way of example, to the accompanying drawings in which:—

Figure 1 is a sectional view of a repeating thermocouple,

Figure 2 is a diagram showing the addition of thermosetting sand in the cavity surrounding the thermocouple, and

Figure 3 is a perspective view of the finished repeating use thermocouple.

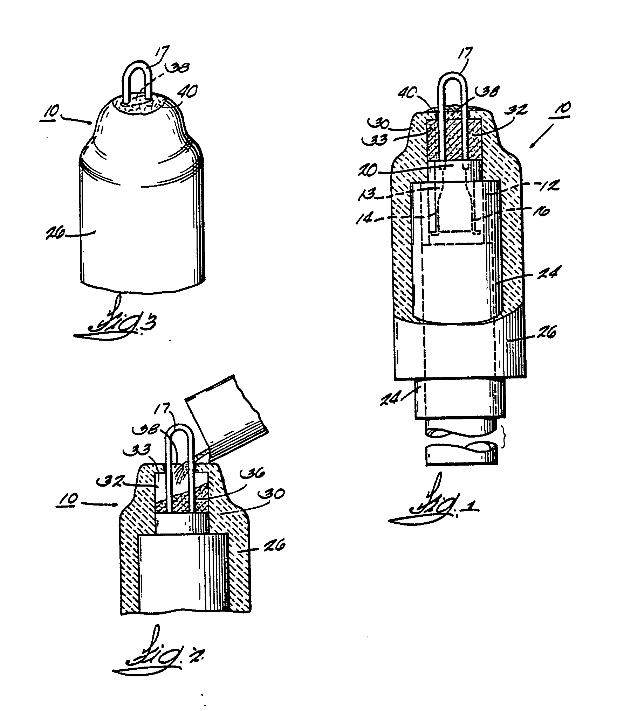

In the drawing, the thermocouple assembly 10 includes a cardboard or paperboard sleeve 12 which has a connector head 13 for the electrical connector which couples with the lead wires 14 and 16. The U-shaped thermocouple tube 17 is anchored in rigid support means comprised by refractory cement at 20 at the end of the tube 12 and the tube 12 is located in a cardboard support tube 24. A refractory fibre sleeve 26 is fitted around the tube 12 and has a dome-shaped wall means 30 which defines a cavity 32 having an opening 33 at one end through which the U-shaped tip of the thermocouple tube 17 projects.

In manufacture of the thermocouple assembly, the cavity 32 is filled with a thermosetting foundry sand and resin mix 36. A refractory fibre gasket 38 is placed thereover and a ceramic cap 40 is provided. The assembly is then baked to set the sand. The unit is then ready for use.

When the sand-resin mix 36 increases in temperature when the thermocouple assembly 10 is inserted in a molten metal bath, the resin burns or disintegrates but does not expand or contract. Thus no stresses on the tube 17 are caused by heating or cooling of the sand fill 36. Hence, breakage of the tube during use is minimised. The sand fill 36 provides stable support for the tube 17 without the disadvantages of prior art constructions.

## Claims

1. A thermocouple assembly (10) for repeated immersion of a temperature sensing element in a molten metal bath, said assembly including a support tube (24), a temperature sensing element (17) having a U-shaped projecting tip with spaced legs, and a rigid support means (20) for supporting said temperature sensing element within said tube (24), a refractory fibre sleeve (26) fitted around said tube in such a way as to define a cavity (32) at one end of said sleeve, said sleeve having an opening (33) at said one end to allow said U-shaped tip to project therethrough, and a refractory fibre gasket (38) spanning said opening (33) in said sleeve (26), characterised by thermosetting sand packing (36) filling said cavity and surrounding the part of said U-shaped tip within said cavity, and a refractory cement cap (40) sealing the end of said fibre sleeve around the projecting tip and encasing said refractory fibre gasket (38).

2. A method of making a reusable thermocouple assembly according to claim 1, comprising the steps of inserting the thermocouple head in said sleeve with the tip projecting through said opening (33), filling said cavity (32) surrounding said part of said tip (17) with thermosetting sand, covering the cavity with said refractory fibre gasket (38), covering the gasket with said refractory cement and baking the sand to set the latter.

## Patentansprüche

1. Thermoelementeinheit (10) zum wiederholten Eintauchen eines Temperaturfühlerelements in ein Metallschmelzbad, welche Einheit ein Halterohr (24), ein Temperaturfühlerelement (17) mit einer U-förmigen vorstehenden Spitze mit beabstandeten Schenkeln, und eine starre Halterung (20) zum Halten des Temperaturfühlerelements innerhalb des Rohres (24) aufweist, wobei eine feuerfeste Fiberhülse (26) um das Rohr herum derart angebracht ist, um einen Hohlraum (32) an einem Ende der Hülse zu definieren, wobei die Hülse eine Öffnung (33) an diesem einen Ende hat, um das Hindurchragen der U-förmigen Spitze zu ermöglichen, und wobei eine feuerfeste Fiberdichtung (38) die Öffnung (33) in der Hülse (26) überbrückt, gekennzeichnet durch eine wärmehärtende Sandpackung (36), die den Hohlraum füllt und den Teil der U-förmigen Rohre innerhalb des Hohlraums umgibt, und durch eine feuerfeste Zementkappe (40), die das Ende der Fiberhülse rund um die vorstehende Spitze dicht abschließt und die feuerfeste Fiberdichtung (38) einschließt.

2. Verfahren zum Herstellen einer wiederverwendbaren Thermoelementeinheit nach Anspruch 1, mit den Schritten, daß der Thermoelementkopf in die Hülse eingesetzt wird, wobei die Spitze durch die Öffnung (33) vorsteht, daß der Hohlraum (32), der den genannten Teil der Rohre (17) umgibt, mit wärmehärtendem Sand gefüllt wird, daß der Hohlraum mit der feuerfesten Fiberdichtung (38) abgedeckt wird, daß die Dichtung mit feuerfestem Zement bedeckt wird, und daß der Sand zu seiner Härtung ausgeheizt wird.

## Revendications

1. Système de thermocouple (10) pour immersion répétitive d'un élément de détection de température dans un bain de métal fondu, ce système comprenant un tube support (24), un élément de détection de température (17) comportant un embout en saillie en forme de U ayant des pattes espacées, et des moyens de support rigides (20) pour maintenir ledit élément de détection de température à l'intérieur dudit tube (24), un manchon en fibres réfractaires (26) ajusté autour dudit tube de manière à délimiter une cavité (32) à une extrémité dudit manchon, ce manchon ayant une ouverture (33) à ladite extrémité pour permettre audit embout en forme de U de faire saillie au travers, et une garniture de fibres réfractaires (38) enjambant ladite ouverture (33) dans ledit manchon (26), caractérisé en ce qu'une garniture de sable thermodurcissable (36) remplit ladite cavité et entoure la partie dudit tube en forme de U dans cette cavité et en ce qu'une calotte en ciment réfractaire (40) scelle l'extrémité dudit manchon en fibres autour de l'embout en saillie en enfermant ladite garniture de fibres réfractaires (38).

2. Procédé de fabrication d'un système de thermocouple réutilisable selon la revendication 1, qui comprend les étapes consistant à: introduire la tête du thermocouple dans ledit manchon de manière que l'embout fasse saillie au travers de ladite ouverture (33); remplir ladite cavité (32) entourant ladite partie dudit tube (17) avec un sable thermoducissable; recouvrir la cavité à l'aide de ladite garniture en fibres réfractaires (38); recouvrir la garniture avec ledit ciment réfractaire et cuire le sable pour en assurer le durcissement.

0 146 205

Fig. 3

Fig. 2

Fig. 1

1